# FASCICULE DE BREVET EUROPEEN

(11) **EP 3 845 802 B1**
(45) Date de publication et mention de la délivrance du brevet: **24.07.2024**
(21) Numéro de dépôt: 20211751.1
(22) Date de dépôt: 04.12.2020
(51) Int. Cl.: F21S 43/235, F21S 43/237, F21S 43/27, F21S 43/247, F21S 43/19, F21S 45/50, F21V 8/00

(54) **BOITIER DE CONNEXION COMPRENANT UN COUPLEUR OPTIQUE SURMOULÉ**
ANSCHLUSSDOSE, DIE EINEN AUFGEFORMTEN OPTOKOPPLER UMFASST
CONNECTION UNIT COMPRISING AN OVERMOULDED OPTICAL COUPLER

(30) Priorité: 20.12.2019 FR 1915127
(43) Date de publication de la demande: 07.07.2021
(73) Titulaire: Compagnie Plastic Omnium SE, 69007 Lyon (FR)
(72) Inventeur: KHAYAT, Issam, 01150 Sainte-Julie (FR); CRETIER, Romain, 01150 Sainte-Julie (FR); JACQUEMET, Thierry, 01150 Sainte-Julie (FR)
(74) Mandataire: LLR

(56) Documents cités:
- US-A1- 2018 223 096
- US-A1- 2018 299 092
- US-A1- 2019 250 343

## Description

L'invention concerne le domaine de la connectique plus spécifiquement appliqué à l'industrie automobile.

Il est dorénavant courant dans l'industrie automobile d'utiliser des faisceaux de fibres pour amener de la lumière en un point particulier du véhicule situé à un endroit visible depuis l'intérieur ou l'extérieur du véhicule.

L'usage de faisceaux de fibres s'avère particulièrement avantageux lorsque la zone à éclairer se trouve à la surface d'une pièce de carrosserie exposée aux agressions extérieures et à l'humidité. Dans cette configuration, la source de lumière, est disposée dans un endroit de l'habitacle protégé, et le faisceau de fibres est déployé depuis la diode jusqu'à la zone à éclairer. A titre d'exemple, le faisceau de fibres optiques peut servir à former une nappe éclairante sur une pièce de carrosserie.

Le raccordement de la diode électroluminescente avec le faisceau de fibres optiques se fait alors à l'aide d'une connectique adaptée.

L'extrémité du faisceau de fibre est maintenue par une férule permettant d'assurer la liaison mécanique entre l'extrémité du faisceau de fibres et la connectique de la source de lumière formée généralement d'une diode électroluminescente. Un coupleur optique est alors disposé entre la diode électroluminescente et l'extrémité du faisceau de fibres dans le but de répartir la lumière émise par la diode sur l'ensemble des fibres composant le faisceau. Ce coupleur optique permet de guider la lumière émise par la diode de sorte que l'angle d'incidence des rayons lumineux en sortie du coupleur optique soit inférieur à une valeur critique donnée.

Il est par ailleurs courant, dans l'industrie automobile, d'utiliser la paroi d'un boitier pour supporter des connexions de toutes sortes, et en règle générale des connexions électriques. Les connecteurs sont disposés sur une première face de la paroi d'un boitier et sont reliés aux câbles du faisceau électrique. Les broches d'alimentation des organes du véhicule sont alors insérées dans les connecteurs depuis la seconde face de ladite paroi opposée à la première face.

La première face de la paroi, du côté de laquelle circule le faisceau électrique, est généralement isolée de la partie externe du véhicule.

Le document US 2018/299092 A1 divulgue un tel boîtier de connexion comprenant dans sa paroi un tube cylindrique en deux partie, de part et d'autre de la paroi, de deux diamètres différents, la partie ayant le diamètre le plus grand recevant un manchon cylindrique recevant un faisceau de fibres d'une part et une première extrémité d'un coupleur optique d'autre part, et la partie au diamètre le plus petit du tube cylindrique recevant un tube creux dans une extrémité duquel s'enfiche la seconde extrémité du coupleur optique, l'autre extrémité du tube creux comprenant des projections mâles qui se couplent à une source de lumière.

Un montage analogue, permettant d'utiliser des organes couramment disponibles dans le commerce, est souhaitable dans le cas spécifique de la connexion d'une diode électroluminescente avec un faisceau de fibres optiques.

L'invention a pour objet de proposer une solution originale permettant de réaliser la connexion entre un faisceau de fibres et une diode électroluminescente sur une paroi d'un boitier de connexion tout en permettant d'isoler la diode électroluminescente du milieu extérieur.

Le boitier de connexion selon l'invention est fabriqué en matériau thermoplastique ou thermodurcissable. Le boitier en matériau comprend sur une de ses parois, un premier manchon cylindrique de raccordement, d'axe XX', pour recevoir, depuis une première face de ladite paroi du boitier, une diode électroluminescente, et un second manchon cylindrique de raccordement, de même axe que le premier manchon de raccordement, pour recevoir, depuis une seconde face de ladite paroi du boitier opposée à la première face, une férule clivée autour d'une extrémité d'un faisceau de fibres.

Le boitier de connexion se caractérise en ce qu'un coupleur optique dont l'axe optique est confondu avec l'axe du premier et du deuxième manchon de raccordement est surmoulé dans le boitier entre le premier et le deuxième manchon de raccordement. Le coupleur optique a pour fonction de répartir de manière homogène un flux lumineux produit par la diode électroluminescente sur l'ensemble des fibres composant le faisceau et d'ajuster en dessous d'un seuil préétabli un angle de pénétration de rayons lumineux dans les fibres de manière à assurer une bonne propagation de la lumière par réflexion successives sur des parois internes de chacune des fibres.

Le premier et le deuxième manchons de raccordement peuvent alors facilement être conçus pour recevoir une diode électroluminescente et une férule dont les modes de montage et de démontage obéissent à des normes standards, sans qu'il soit nécessaire de s'assurer du montage du coupleur optique qui reste fixe et qui peut alors être parfaitement aligné dans l'axe de la diode et des fibres.

Suivant d'autres caractéristiques optionnelles, prises seules ou en combinaison :
- Le coupleur optique a la forme d'un cône tronqué.
- Le coupleur optique est un polyèdre en forme de pyramide tronquée dont la base est un polygone régulier.
- Le coupleur optique comprend une collerette s'étendant radialement.
- Le coupleur optique est formé d'un matériau choisi parmi l'un des matériaux suivants : le verre, le silicone, les polymères ou les copolymères amorphes tels que les polyacryliques, les polycarbonates (PC), le polymétacrylate de methyle (PMMA) ou encore le polyuréthane transparent (PU).
- Le coupleur optique comprend une face d'entrée de la lumière émergeant du côté de la première face de la paroi et placée en vis-à-vis de la diode électroluminescente et une face de sortie de la lumière émergeant du côté de la seconde face de la paroi et placée en vis-à-vis de l'extrémité des fibres optiques.
- le second manchon de raccordement comprend une gorge circulaire disposée sur la face interne ou externe de la partie cylindrique pour être clipsée avec un épaulement disposé sur la férule.
- La paroi formant le corps du second manchon de raccordement comprend des fentes axiales de sorte que des éléments de la paroi du second manchon de raccordement peuvent s'écarter radialement les unes des autres de façon élastique lors de l'insertion dans la gorge circulaire de l'épaulement disposé sur la férule.
- Le premier manchon de raccordement est aménagé pour former avec la diode luminescente une liaison de type quart de tour.
- La première face de la paroi dudit boitier comporte une portée sur laquelle, lorsque la diode électroluminescente est insérée dans le premier manchon de raccordement un joint est disposé entre ladite première face du boitier et la diode électroluminescente pour former une liaison étanche.
- Le boitier, le premier et le second manchon de raccordement forment une pièce unique venue de matière.
- Le boitier, le premier et le second manchon de raccordement sont formés d'un matériau thermoplastique choisi parmi l'un des matériaux suivants : le polypropylène (PP) chargé ou non, le polyamide (PA), le polycarbonate (PC), le polymétacrylate de méthyle (PMMA), le polytéréphtalate de butylène (PBT).

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en coupe transversale du boitier de connexion selon l'invention.
[Fig. 2] la figure 2 est une vue en perspective du boitier de connexion vue du côté de la seconde face.
[Fig. 3] la figure 3 est une vue en perspective du boitier de connexion dans lequel sont présentés avant insertion la diode électroluminescente et le faisceau de fibres optiques.
[Fig. 4] la figure 4 est une vue en perspective du coupleur optique selon une première forme de réalisation.
[Fig. 5] la figure 5 est une vue en perspective du coupleur optique selon une seconde forme de réalisation.
[Fig. 6] la figure 6 est une vue en coupe du boitier de connexion dans lequel la diode électroluminescente et la férule ont été insérées selon un premier mode de réalisation de ladite férule.
[Fig. 7] la figure 7 est une vue en coupe du boitier de connexion dans lequel la diode électroluminescente et la férule ont été insérées selon un second mode de réalisation de ladite férule.
[Fig. 8] la figure 8 est une vue en perspective du boitier de connexion vu du côté de la première face, dans lequel la diode électroluminescente est insérée dans le premier manchon de raccordement.
[Fig. 9] la figure 9 est une vue en perspective du boitier de connexion vu du côté de la seconde face, dans lequel la férule du faisceau de fibres est insérée dans le second manchon de raccordement.

### Description détaillée

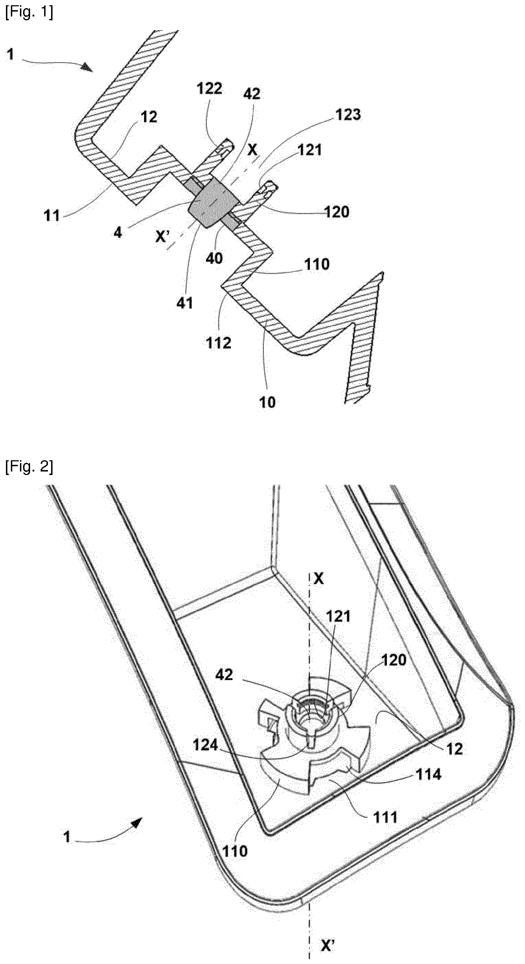

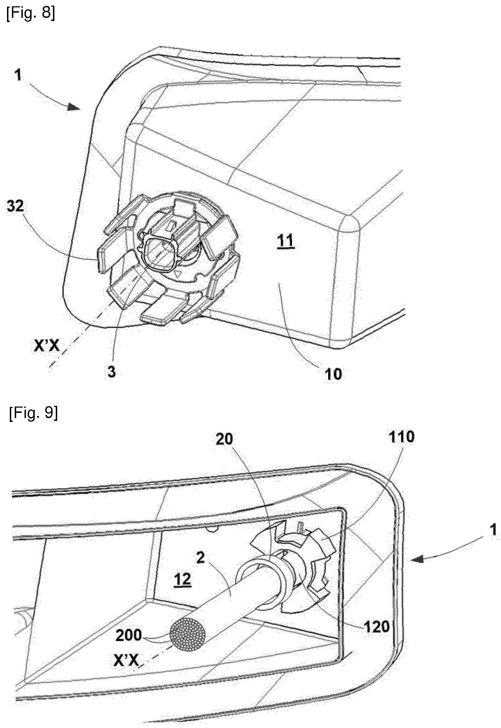

En référence aux figures 1 à 9, le boitier 1 selon l'invention comprend une paroi 10 supportant un premier manchon de raccordement 110 d'axe XX' destiné à recevoir en accédant par une première face 11 une diode électroluminescente 3. Un second manchon de raccordement 120 est disposé de l'autre côté de la paroi 10 et permet de recevoir, en accédant par la seconde face 12, une férule 20 clivée autour de l'extrémité d'un faisceau de fibres optiques 2.

La forme du premier manchon de raccordement 110 est adaptée pour obéir au standard (IEC 60061 1) de connexion d'interface de type quart de tour. Le premier manchon de raccordement présente un orifice d'entrée 113 réalisé dans la paroi 10 et accessible par la première face 11 de la paroi 10.

L'introduction de la diode électroluminescente se fait en présentant la diode au droit de l'orifice d'entrée 113 du premier manchon de raccordement 110 situé du côté de la première face 11 de la paroi 10 et en translatant la diode le long de l'axe X'X.

La diode électroluminescente 3 comporte des ailettes de refroidissement 32 permettant d'évacuer les calories engendrées par les composants électroniques.

Des ergots 33, répartis circonférentiellement, s'étendent radialement depuis l'extrémité avant du corps de la diode électroluminescente.

Des lumières radiales 114 sont pratiquées dans la paroi 10 pour permettre le passage des ergots 33.

Lors de l'introduction de la diode 3 dans le premier manchon de raccordement 110, les ergots 33 pénètrent de l'autre côté de la paroi 10 et, en faisant tourner la diode 3 d'un quart de tour, viennent reposer sur des portées 111 s'étendant radialement et disposées du côté de la seconde face 12. Les ergots s'opposent alors à l'extraction de la diode électroluminescente 3 lorsque ladite diode est introduite dans le premier manchon de raccordement 110.

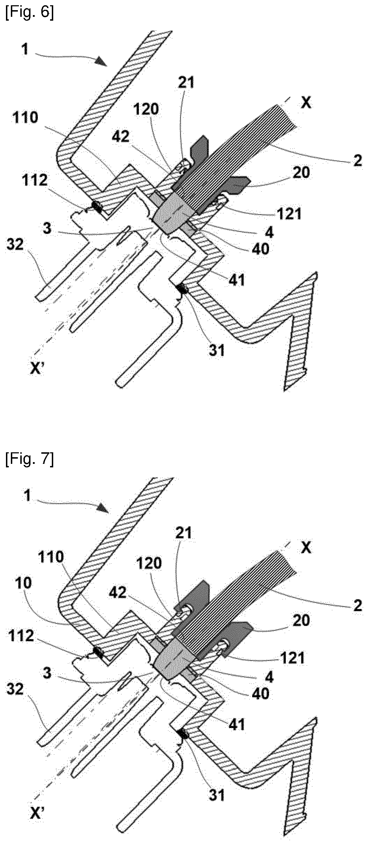

Lorsque la diode électroluminescente 3 est en place, un joint d'étanchéité 31 vient se mettre en compression entre le corps de la diode électroluminescente 3 et une portée 112 située sur la première face 11, comme cela est illustré aux figures 6 et 7, de manière à créer une liaison étanche destinée à interdire la pénétration des souillures extérieures du côté de la première face 11 de la paroi 10.

Bien évidemment, l'invention n'est pas limitée à ce mode de fixation et tout autre type de fixation amovible peut être mis en oeuvre moyennant une adaptation spécifique de la forme du premier manchon de raccordement 110. De manière équivalente, il est également possible de fixer la diode électroluminescente 3 dans le premier manchon de raccordement 110 par une soudure laser, par collage ou par boutrollage. Ces derniers modes de fixations présentent toutefois l'inconvénient de ne pas faciliter le montage et le démontage rapide de la diode.

L'orifice d'entrée 123 du second manchon de raccordement 120 est accessible depuis la seconde face 12 de la paroi 10. La forme du second manchon de raccordement 120 est également adaptée pour assurer la liaison mécanique avec une férule 20 de maintien de l'extrémité des fibres optiques unitaires 200 formant le faisceau 2.

L'introduction de la férule 20 se fait en présentant ladite férule 20 au droit de l'orifice d'entrée 123 du second manchon de raccordement 120 situé du côté de la seconde face 12 de la paroi 10 et en translatant la diode le long de l'axe XX'.

Plusieurs standards de férules coexistent sur le marché. Aussi, à titre d'exemple, on retiendra deux formes d'exécution illustrées aux figures 6 et 7.

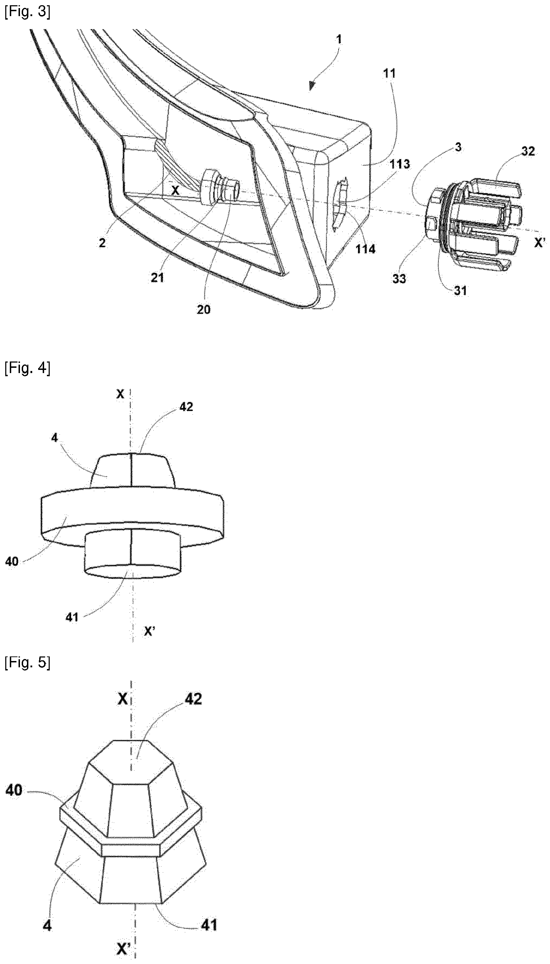

La figure 6 illustre un principe de montage dans lequel un épaulement ou encore un clip 21 est disposé sur la périphérie extérieure de la férule 20. Le second manchon de raccordement comporte une gorge circulaire 121 interne dans laquelle l'épaulement vient se clipser. Ces clips s'opposent à l'extraction de la férule lorsque ladite férule est introduite dans ledit second manchon de raccordement. Des fentes axiales 124 pratiquées dans la paroi du corps du second manchon de raccordement 120, visibles à la figure 3 autorisent le déplacement élastique dans la direction radiale des éléments de la paroi du second manchon de raccordement 120 de manière à faciliter l'introduction de la férule 20.

Le cas illustré à la figure 7 prévoit un principe de montage dans lequel l'épaulement 21 est disposé sur des griffes de clipsage s'étendant axialement le long du corps de la férule 20. Ces épaulements viennent s'insérer dans une gorge circulaire externe 122 disposée sur le second manchon de raccordement 120.

Les parois du boitier, ainsi que le premier et le deuxième manchon de raccordement sont utilement réalisés en une seule opération de moulage d'une matière thermodurcissable ou préférentiellement thermoplastique pour former une pièce unique venue de matière.

Des matériaux tels que le polypropylène (PP) chargé ou non, le polyamide (PA), le polycarbonate (PC), le polymétacrylate de méthyle (PMMA), le polytéréphtalate de butylène (PBT) conviennent pour cet usage.

Le coupleur optique 4 est disposé entre le premier manchon de raccordement 110 et le second manchon de raccordement 120.

L'axe optique du coupleur 4 est confondu avec l'axe XX' du premier 110 et du second 120 manchon de raccordement.

Le coupleur optique comprend une face d'entrée de la lumière 41 placée en vis-à-vis de la diode électroluminescente 3 et une face de sortie de la lumière 42 placée en vis-à-vis de l'extrémité des fibres 200.

Le coupleur optique 4 est surmoulé par la matière de la pièce unique formant le corps du boitier et les manchons de raccordement.

Comme cela a déjà été évoqué ci-dessus le coupleur optique 4 a pour fonction de répartir de manière homogène le flux lumineux produit par la diode électroluminescente 3 sur l'ensemble des fibres unitaires 200 composant le faisceau 2 et d'ajuster en dessous d'un seuil préétabli l'angle de pénétration des rayons lumineux dans les fibres de manière à assurer une bonne propagation de la lumière par réflexion successives sur les parois internes de chacune des fibres.

Plusieurs dispositifs optiques sont susceptibles d'assurer cette fonction.

Une première solution consiste à utiliser une lentille (non représentée) permettant de faire converger les rayons lumineux ou dans certains cas de délivrer une lumière collimatée. La lentille peut être en verre ou encore en silicone ou en polymère.

Une autre solution, moins onéreuse, consiste à utiliser un guide de lumière réalisé par moulage d'un polymère transparent, généralement thermoplastique.

Les matériaux pouvant convenir à cet usage seront utilement choisis parmi des matériaux tels que les polymères ou les copolymères amorphes, les polyacryliques, les polycarbonates (PC), le polymétacrylate de méthyle (PMMA) ou encore le polyuréthane transparent (PU). On sélectionnera de préférence un matériau compatible avec le matériau formant le boitier.

La forme du coupleur optique 4, telle qu'illustrée aux figures 4 et 5 peut être celle d'un cône tronqué à base circulaire ou encore d'un polyèdre en forme de pyramide tronquée dont la base est un polygone régulier.

On observera que le coupleur optique 4 peut comporter utilement une collerette 40 s'étendant radialement depuis le corps dudit coupleur optique 4 de manière à renforcer la liaison entre la matière formant le boitier et les manchons de raccordement et le coupleur optique proprement dit. L'axe optique du coupleur optique est donc parfaitement maintenu dans l'alignement de l'axe XX' du premier 110 et du second 120 manchon de raccordement. En particulier, la position du coupleur optique 4 n'est pas modifiée lors des opérations d'insertion de la diode électroluminescente 3 ou de la férule 20 dans leurs manchons respectifs.

A titre d'information, la longueur du coupleur optique utilisé dans une application de la technologie faisant l'objet de la présente description dans un véhicule automobile est de l'ordre de 10 à 20 mm.

Pour des raisons de stabilité thermique de l'ensemble, il peut s'avérer utile de créer un espace libre entre la face d'entrée de la lumière 41 et les composants électroniques formant la diode électroluminescente. De même, le plan formé par les extrémités des fibres unitaires 200 n'est pas nécessairement en contact avec la face de sortie 42 du coupleur optique 4. Cet espace libre est généralement inférieur à 5mm.

L'opération de moulage des pièces s'effectue de manière connue en introduisant dans le moule le coupleur optique obtenu à une étape précédente du procédé de fabrication et, après avoir fermé le moule, en introduisant la matière formant le boitier et les manchons de raccordement 110 et 120. Cette étape peut utilement se faire par injection.

On observera ici que le boitier tel que décrit ci-dessus ne présente pas de parties en contredépouille et autorise l'usage d'un moule en deux parties. L'extraction de la pièce de moule assurant la formation des gorges 121 ou 122 disposées sur le second manchon de raccordement 120 se fait aisément en mettant à profit l'élasticité radiale des parois du second manchon de raccordement.

Pour une bonne transmission du flux lumineux, on s'assurera que les faces d'entrée 41 et de sortie 42 de la lumière ne sont pas recouvertes de matière et émergent respectivement du côté de la première face 11 et de la seconde face 23.

De même, on veillera à ne pas dégrader les qualités optiques du coupleur 4 en opérant à une température d'injection trop élevée.

Dans l'exemple servant de support à la présente description le premier manchon de raccordement 110 dont l'entrée 113 est accessible depuis la première face 11 de la paroi 10 est formé par l'épaisseur de la paroi 10 et s'étend physiquement du côté de la seconde face 12. Cet arrangement permet de mettre à profit la paroi 10 pour guider la diode et pour engager les ergots de verrouillage 33. Les parois latérales 110 du premier manchon de raccordement sont formées ici par des jambes s'étendant axialement depuis la seconde face 12 qui servent de support au deuxième manchon de raccordement 120 et au coupleur optique 4.

Cette conception particulière, présente l'avantage de la simplicité dans sa mise oeuvre en raison des économies de matière et du coût réduit des moyens de moulage.

Aussi, l'invention n'est pas limitée à ce mode de réalisation présenté et d'autres modes de réalisation apparaîtront clairement à l'homme du métier. Il est par exemple possible d'obtenir un résultat similaire en disposant le premier manchon de raccordement 110 de sorte que ses parois s'étendent axialement du côté de la première face 11. Le second manchon 120 de raccordement peut être placé en contact direct de la seconde face 12 et le coupleur optique 4 est alors disposé sensiblement au niveau de la paroi 10.

### Liste de références

- 1: Boitier.
- 10: Paroi du boitier.
- 11: Première face.
- 110: Premier manchon de raccordement ¼ de tour de la diode électroluminescente.
- 111: Portées radiales de réception des ergots de verrouillage.
- 112: Portée du joint d'étanchéité.
- 113: Orifice d'entrée du premier manchon de raccordement.
- 114: Lumières radiales.
- 12: Seconde face.
- 120: Second manchon de raccordement du faisceau de fibre.
- 121: Gorge interne.
- 122: Gorge externe.
- 123: Orifice d'entrée du second manchon de raccordement.
- 124: Fentes axiales.
- 2: Faisceau de fibres.
- 200: Fibres unitaires.
- 20: Férule.
- 21: Epaulement.
- 3: Diode électroluminescente.
- 31: Joint d'étanchéité.
- 32: Ailettes de refroidissement. Connecteur ¼ de tour.
- 33: Ergot de verrouillage ¼ de tour.
- 4: Coupleur optique.
- 40: Collerette.
- 41: Face d'entrée de la lumière.
- 42: Face de sortie de la lumière.
- XX': Axe optique.

## Revendications

1. Boitier de connexion (1) en matériau thermoplastique ou thermodurcissable comprenant sur une de ses parois (10), un premier manchon cylindrique de raccordement (110), d'axe XX', pour recevoir, depuis une première face (11) de ladite paroi (10) du boitier (1), une diode électroluminescente (3), et un second manchon cylindrique de raccordement (120), de même axe (XX') que le premier manchon de raccordement (110), pour recevoir, depuis une seconde face (12) de ladite paroi (10) du boitier (1) opposée à la première face (11), une férule (20) clivée autour d'une extrémité d'un faisceau (2) de fibres (200), dans lequel un coupleur optique (4), dont l'axe optique est confondu avec l'axe (XX') du premier (110) et du deuxième (120) manchon de raccordement, est surmoulé dans le boitier (1) entre le premier (110) et le deuxième (120) manchon de raccordement, le coupleur optique (4) ayant pour fonction de répartir de manière homogène un flux lumineux produit par la diode électroluminescente (3) sur l'ensemble des fibres (200) composant le faisceau (2) et d'ajuster en dessous d'un seuil préétabli un angle de pénétration de rayons lumineux dans les fibres (200) de manière à assurer une bonne propagation de la lumière par réflexion successives sur des parois internes de chacune des fibres (200).

2. Boitier de connexion (1) selon la revendication 1, dans lequel le coupleur optique (4) a la forme d'un cône tronqué.

3. Boitier de connexion (1) selon la revendication 1, dans lequel le coupleur optique (4) est un polyèdre en forme de pyramide tronquée dont la base est un polygone régulier.

4. Boitier de connexion (1) selon l'une quelconque des revendications précédentes, dans lequel le coupleur optique (4) comprend une collerette (40) s'étendant radialement.

5. Boitier de connexion (1) selon l'une quelconque des revendications précédentes, dans lequel le coupleur optique (4) est formé d'un matériau choisi parmi l'un des matériaux suivants : le verre, le silicone, les polymères ou les copolymères amorphes tels que les polyacryliques, les polycarbonates, PC, le polymétacrylate de methyle, PMMA, ou encore le polyuréthane transparent, PU.

6. Boitier de connexion (1) selon l'une quelconque des revendications précédentes, dans lequel le coupleur optique (4) comprend une face d'entrée (41) de la lumière émergeant du côté de la première face (11) de la paroi (10) et placée en vis-à-vis de la diode électroluminescente (3) et une face de sortie (42) de la lumière émergeant du côté de la seconde face (12) de la paroi (10) et placée en vis-à-vis de l'extrémité des fibres optiques (200).

7. Boitier de connexion (1) selon l'une quelconque des revendications précédentes, dans lequel le second manchon (120) de raccordement comprend une gorge circulaire (120, 121) disposée sur la face interne ou externe de la partie cylindrique pour être clipsé avec un épaulement (21) disposé sur la férule (20).

8. Boitier de connexion (1) selon la revendication 7, dans lequel la paroi formant le corps du second manchon de raccordement (120) comprend des fentes axiales (124), de sorte que des éléments de la paroi du second manchon de raccordement (120) peuvent s'écarter radialement les uns des autres de façon élastique lors de l'insertion dans la gorge circulaire (120, 121) de l'épaulement (21) disposé sur la férule (20).

9. Boitier de connexion (1) selon l'une quelconque des revendications précédentes, dans lequel le premier manchon de raccordement (110) est aménagé pour former avec la diode luminescente (3) une liaison de type quart de tour.

10. Boitier de connexion (1) selon l'une quelconque des revendications précédentes, dans lequel la première face (11) de la paroi (10) dudit boitier (1) comporte une portée (112) sur laquelle, lorsque la diode électroluminescente (3) est insérée dans le premier manchon de raccordement (110) un joint (31) est disposé entre ladite première face (11) du boitier et la diode électroluminescente (3) pour former une liaison étanche.

11. Boitier de connexion (1) selon l'une quelconque des revendications précédentes, dans lequel les parois du boitier, le premier et le second manchon de raccordement (110, 120) forment une pièce unique venue de matière.

12. Boitier de connexion selon la revendication 11, dans lequel les parois du boitier le premier et le second manchon de raccordement (110, 120) sont formés d'un matériau thermoplastique choisi parmi l'un des matériaux suivants : le polypropylène, PP, chargé ou non, le polyamide, PA, le polycarbonate, PC, le polymétacrylate de méthyle, PMMA, le polytéréphtalate de butylène, PBT.

## Patentansprüche

1. Anschlussdose (1) aus thermoplastischem oder duroplastischem Material, das auf einer seiner Wände (10) eine erste zylindrische Anschlussmuffe (110) mit der Achse XX' aufweist, um von einer ersten Seite (11) der genannten Wand (10) der Dose (1) aus eine lichtemittierende Diode (3) aufzunehmen, und eine zweite zylindrische Anschlussmuffe (120) aufweist, mit derselben Achse (XX') wie die erste Verbindungsmuffe (110), um von einer zweiten Seite (12) der Wand (10) der Dose (1), die der ersten Seite (11) gegenüberliegt, eine Ferrule (20) aufzunehmen, die um ein Ende eines Bündels (2) von Fasern (200) gespalten ist, wobei ein Optokoppler (4), dessen optische Axe (XX') mit der ersten (110) und der zweiten (120) Verbindungsmuffe zusammenfällt, in das Gehäuse (1) zwischen der ersten (110) und der zweiten (120) Verbindungsmuffe eingegossen ist, wobei der Optokoppler (4) die Funktion hat, einen von der lichtemittierenden Diode (3) erzeugten Lichtstrom homogen auf die Gesamtheit der Fasern (200), die das Bündel (2) bilden, zu verteilen und einen Eindringwinkel der Lichtstrahlen in die Fasern (200) unterhalb eines vorbestimmten Schwellenwerts so zu steuern, dass eine gute Lichtausbreitung durch aufeinanderfolgende Reflexion an den Innenwänden jeder der Fasern (200) gewährleistet ist.

2. Anschlussdose (1) nach Anspruch 1, wobei der Optokoppler (4) die Form eines Kegelstumpfes hat.

3. Anschlussdose (1) nach Anspruch 1, wobei der Optokoppler (4) ein Polyeder in Form einer abgestumpften Pyramide ist, deren Basis ein regelmäßiges Polygon ist.

4. Anschlussdose (1) nach einem der vorhergehenden Ansprüche, wobei der Optokoppler (4) einen sich radial erstreckenden Flansch (40) aufweist.

5. Anschlussdose (1) nach einem der vorhergehenden Ansprüche, wobei der Optokoppler (4) aus einem Material besteht, das aus einem der folgenden Materialien ausgewählt ist: Glas, Silikon, amorphe Polymere oder Copolymere wie Polyacryl, Polycarbonat, PC, Polymethylmetacrylat, PMMA, oder transparentes Polyurethan, PU.

6. Anschlussdose (1) nach einem der vorhergehenden Ansprüche, wobei der Optokoppler (4) eine Lichteingangsseite (41), die aus der Seite der ersten Seite (11) der Wand (10) austritt und gegenüber der lichtemittierenden Diode (3) angeordnet ist, und eine Lichtausgangsseite (42) aufweist, die aus der Seite der zweiten Seite (12) der Wand (10) austritt und gegenüber dem Ende der optischen Fasern (200) angeordnet ist.

7. Anschlussdose (1) nach einem der vorhergehenden Ansprüche, wobei die zweite Verbindungsmuffe (120) eine kreisförmige Nut (120, 121) aufweist, die auf der Innen- oder Außenseite des zylindrischen Teils angeordnet ist, um mit einer Schulter (21), die auf der Ferrule (20) angeordnet ist, eingeklipst zu werden.

8. Anschlussdose (1) nach Anspruch 7, wobei die den Körper der zweiten Verbindungsmuffe (120) bildende Wand axiale Schlitze (124) aufweist, so dass Elemente der Wand der zweiten Verbindungsmuffe (120) beim Einführen in die kreisförmige Nut (120, 121) der an der Ferrule (20) angeordneten Schulter (21) elastisch radial voneinander wegbewegt werden können.

9. Anschlussdose (1) nach einem der vorhergehenden Ansprüche, bei dem die erste Verbindungsmuffe (110) so eingerichtet ist, dass sie mit der lichtemittierenden Diode (3) eine Vierteldrehungsverbindung bildet.

10. Anschlussdose (1) nach einem der vorhergehenden Ansprüche, wobei die erste Seite (11) der Wand (10) der Dose (1) eine Auflagefläche (112) aufweist, auf der, wenn die lichtemittierende Diode (3) in die erste Verbindungsmuffe (110) eingeführt ist, eine Dichtung (31) zwischen der ersten Seite (11) der Dose und der lichtemittierenden Diode (3) angeordnet ist, um eine dichte Verbindung zu bilden.

11. Anschlussdose (1) nach einem der vorhergehenden Ansprüche, wobei die Gehäusewände, die erste und die zweite Verbindungsmuffe (110, 120) ein einziges, aus einem Stück gefertigtes Teil bilden.

12. Anschlussdose nach Anspruch 11, wobei die Wände der Dose, die erste und die zweite Verbindungsmuffe (110, 120) aus einem thermoplastischen Material gebildet sind, das aus einem der folgenden Materialien ausgewählt ist: Polypropylen, PP, mit oder ohne Füllstoff, Polyamid, PA, Polycarbonat, PC, Polymethylmetacrylat, PMMA, Polybutylenterephthalat, PET.

## Claims

1. Connection housing (1) of thermoplastic or thermosetting material comprising on one of its walls (10) a first cylindrical connection sleeve (110), with an XX' axis, for receiving, from a first face (11) of said wall (10) of the housing (1), a light-emitting diode (3), and a second cylindrical connection sleeve (120), with the same axis (XX') as the first connection sleeve (110), for receiving, from a second face (12) of said wall (10) of the housing (1) opposite the first face (11), a ferrule (20) cleaved around one end of a bundle (2) of fibers (200), in which an optical coupler (4), the optical axis of which is coincident with the axis (XX') of the first (110) and the second (120) connection sleeve, is overmolded in the housing (1) between the first (110) and the second (120) connection sleeve, the optical coupler (4) having the function of homogeneously distributing a luminous flux produced by the light-emitting diode (3) on all the fibers (200) composing the bundle (2) and of adjusting below a pre-established threshold an angle of penetration of light rays into the fibers (200) so as to ensure a good propagation of light by successive reflections on the inner walls of each of the fibers (200).

2. Connection housing (1) according to claim 1, wherein the optical coupler (4) is in the form of a truncated cone.

3. Connection housing (1) according to claim 1, wherein the optical coupler (4) is a truncated pyramid-shaped polyhedron, the base of which being a regular polygon.

4. Connection housing (1) according to any one of the preceding claims, wherein the optical coupler (4) comprises a radially extending flange (40).

5. Connection housing (1) according to any one of the preceding claims, wherein the optical coupler (4) is made with a material selected from one of the following materials: glass, silicone, polymers or amorphous copolymers such as polyacrylics, polycarbonates, PC, methyl polymetacrylate, PMMA, or transparent polyurethane, PU.

6. Connection housing (1) according to any one of the preceding claims, wherein the optical coupler (4) comprises an input face (41) of the light emerging from the side of the first face (11) of the wall (10) and placed opposite the light-emitting diode (3) and an output face (42) of the light emerging from the side of the second face (12) of the wall (10) and placed opposite the end of the optical fibers ( 200).

7. Connection housing (1) according to any one of the preceding claims, wherein the second connection sleeve (120) comprises a circular groove (120, 121) disposed on the inner or outer face of the cylindrical portion to be clipped with a shoulder (21) disposed on the ferrule (20).

8. Connection housing (1) according to claim 7, wherein the wall forming the body of the second connection sleeve (120) comprises axial slots (124), so that elements of the wall of the second connection sleeve (120) can be radially separated from each other in an elastic manner when inserted into the circular groove (120, 121) of the shoulder (21) arranged on the ferrule (20).

9. Connection housing (1) according to any one of the preceding claims, wherein the first connection sleeve (110) is arranged to form a quarter-turn type connection with the emitting diode (3).

10. Connection housing (1) according to any one of the preceding claims, wherein the first face (11) of the wall (10) of said housing (1) comprises a span (112) on which, when the light-emitting diode (3) is inserted into the first connection sleeve (110), a gasket (31) is arranged between said first face (11) of the housing and the light-emitting diode (3) to form a watertight connection.

11. Connection housing (1) according to any one of the preceding claims, wherein the walls of the housing, the first and second connection sleeves (110, 120) form a single piece of material.

12. Connection housing according to claim 11, wherein the walls of the first and second connection sleeve (110, 120) are formed of a thermoplastic material selected from one of the following materials: polypropylene, PP, filled or not, polyamide, PA, polycarbonate, PC, polymethyl metacrylate, PMMA, polybutylene terephthalate, PBT.
